# EUROPÄISCHE PATENTSCHRIFT

(11) **EP 0 474 638 B1**
(45) Veröffentlichungstag und Bekanntmachung des Hinweises auf die Patenterteilung: **05.05.1993**
(21) Anmeldenummer: 90904792.0
(22) Anmeldetag: 19.03.1990
(51) Int. Cl.: B62D 25/04

(54) **KRAFTFAHRZEUGKAROSSERIE**
MOTOR VEHICLE COACHWORK
CARROSSERIE POUR VEHICULES A MOTEUR

(30) Priorität: 05.06.1989 DE 3918280
(43) Veröffentlichungstag der Anmeldung: 18.03.1992
(73) Patentinhaber: AUDI AG, 85045 Ingolstadt (DE)
(72) Erfinder: KLAGES, Ulrich, D-8070 Ingolstadt (DE); ENNING, Norbert, D-8079 Kipfenberg (DE); TIMM, Heinrich, D-8070 Ingolstadt (DE)
(74) Vertreter: Engelhardt, Harald
(86) Internationale Anmeldenummer: EP9000449
(87) Internationale Veröffentlichungsnummer: WO9014981

(56) Entgegenhaltungen:
- DE-U- 8 604 027
- FR-A- 2 025 910
- US-A- 3 222 101
- Patent Abstracts of Japan, vol. 7, no. 250 (M-254)(1935), 8. Nov. 1983

## Beschreibung

Die Erfindung bezieht sich auf eine Kraftfahrzeugkarosserie gemäß dem Oberbegriff des Patentanspruchs.

Eine Kraftfahrzeugkarosserie mit einem durch ein Strangprofil gebildeten Rahmenteil ist beispielsweise aus der US-A-4 618 163 bekannt. Die Strangprofile werden dort durch speziell ausgebildete Knotenelemente zusammengehalten. Diese Bauweise ermöglicht eine kostengünstige Herstellung bei Kleinserien. Bei Großserien stellen jedoch nach wie vor aus Blech hergestellte Rahmenteile die wirtschaftlichste Lösung dar.

Der Erfindung liegt die Aufgabe zugrunde, ein Rahmenteil für eine Kraftfahrzeugkarosserie so auszugestalten, daß kostengünstig komplizierte oder unterschiedliche Querschnitte herstellbar sind.

Die Aufgabe wird durch die kennzeichnenden Merkmale des Patentanspruchs gelöst.

Durch den neuen Aufbau des Rahmenteiles werden die Vorteile, die ein Strangprofil bietet mit den Vorteilen, die der Einsatz von Belch mit sich bringt, addiert.

Im Gegensatz zu nur aus Blechteilen zusammengefügten Rahmenteilen lassen sich Rahmenteile in dem vorgeschlagenen Verbund aus Strangprofil und Blechteil bei komplizierten querschnitten wesentlich einfacher realisieren. Dadurch werden erhebliche Rosten, insbesondere Investitionskosten für Preßwerkzeuge zum Formen des Blechteiles, eingespart.

Die Steifigkeit des Rahmenteils wird hauptsächlich durch das Strangprofil sichergestellt. Das an das Strangprofil angefügte Blechteil, welches mit dem Strangprofil einen Hohlraum bildet, erhöht die Festigkeit zusätzlich.

Das Blechteil bildet einen Teil der Außenhaut der Kraftfahrzeugkarosserie. Dadurch bind die beiden Elemente des Rahmenteils optimal an ihre Aufgaben angepaßt. Während das Blechteil die Außenhaut des Rahmenteiles darstellt und damit in gleicher Beschaffenheit wie die übrigen Außenhautteile der Kraftfahrzeugkarosserie sein kann, stellt das Strangprofil eine ausreichende Steifigkeit des Rahmenteiles sicher. Durch ein Strangprofil läßt sich bei einer relativ geringen Querschnittsfläche und ohne großen Fertigungsaufwand ein hohes Widerstandsmoment erreichen.

Bei einer Kraftfahrzeugkarosserie, bei der zumindest ein Ende des Strangprofils in einem Knotenelement aufgenommen ist, deckt das Blechteil das Knotenelement mit ab. Dadurch wird die Anzahl der Stoßstellen reduziert. Dieb stellt eine nicht unerhebliche Kostenersparnis dar, da die Stoßstellen ansonsten im Sichtbereich vor der Lackierung der Karosserie ausgefüllt und geschliffen werden müßten.

Werden Knotenelement eingesetzt, welche durch einen offenen Formkörper gebildet bind, dann lassen sich durch das Blechteil derartige Knotenelemente in einfacher Weise schließen.

Ein Ausführungsbeispiel der Erfindung ist in der Zeichnung dargestellt und wird nachfolgend näher beschrieben. Es zeigt
- Fig. 1: in perspektivischer Darstellung abschnittsweise einen eine vordere Dachsäule umfassenden Abschnitt einer Kraftfahrzeugkarosserie und
- Fig. 2: den Schnitt II-II aus Fig. 1.

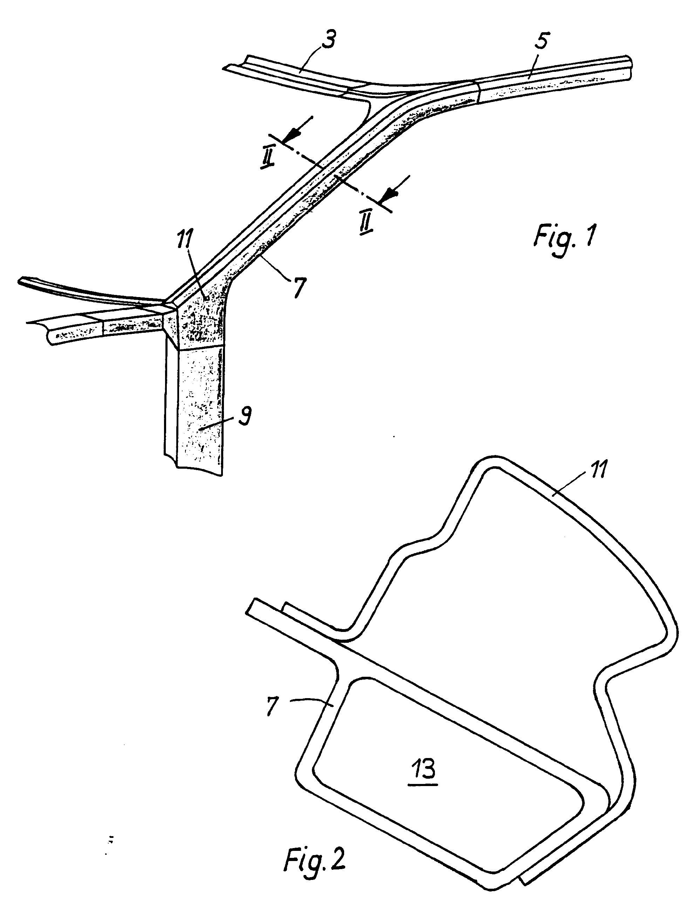

Eine in Fig. 1 abschnittsweise dargestellte Kraftfahrzeugkarosserie umfaßt durch Strangprofile 3, 5, 7 und 9 gebildete Rahmenteile. Die Strangprofile 3, 5 und 7 sind durch ein oberes Knotenelement (in der Zeichnung nicht erkennbar) zusammengehalten. Die Strangprofile 7 und 9 werden durch ein unteres Knotenelement (in der Zeichnung ebenfalls nicht zu erkennen) verbunden.

Zur Außenseite der Kraftfahrzeugkarosserie ist an das Strangprofil 7 ein Blechteil 11 angeschlossen. Während der obere Abschnitt des Blechteiles 11 das obere Knotenelement abdeckt, erstreckt sich der untere Bereich des Blechteiles 11 über das untere Knotenelement hinaus. Das Blechteil 11 bildet also im gesamten Bereich des eine vordere Dachsäule darstellenden Rahmenteiles die Außenhaut der Kraftfahrzeugkarosserie.

Fig. 2 zeigt einen Schnitt durch dieses Rahmenteil und läßt deutlich den Querschnitt des Strangprofils 7 und denjenigen des Blechteiles 11 im Schnittbereich erkennen. Das Blechteil 11 bildet mit dem Strangprofil 7 einen Hohlraum 13. Die Verbindung zwischen Blechteil 11 und Strangprofil 7 kann beispielsweise durch Klebung erfolgen.

## Patentansprüche

1. Kraftfahrzeugkarosserie, wobei Teile des Rahmens durch Strangprofile gebildet sind, welche durch separate Knotenelemente zusammengefügt sind, gekennzeichnet durch folgende Merkmale:
a) mindestens ein Strangprofil (7) ist mit einem vorgeformten Blechteil (11) verbunden,
b) das Blechteil (11) schließt mit der Außenkontur des Strangprofils (7) einen Hohlraum (13) ein,
c) das Blechteil (11) bildet einen Teil der Außenhaut der Kraftfahrzeugkarosserie und
d) das Blechteil (11) deckt zumindest einen Teil des Knotenelements nach außen hin ab.

## Claims

1. A motor vehicle body, wherein parts of the frame are constituted by extruded profiles joined together by separate gusset elements,
characterised by the following features:
a) at least one extruded profile (7) is connected to a performed sheet-metal part (11),
b) the sheet-metal part (11) encloses a hollow compartment (13) with the external contour of the extruded profile (7),
c) the sheet-metal part (11) forms part of the outer shell of the motor vehicle body, and
d) the sheet-metal part (11) masks at least part of the gusset element towards the exterior.

## Revendications

1. Carrosserie de véhicule automobile, dans laquelle les éléments de châssis sont constitués par des profilés filés qui sont réunis par des éléments d'assemblage distincts, **caractérisée** par les caractéristiques suivantes :
a) au moins un profilé filé (7) est assemblé à une pièce de tôle (11) préalablement façonnée,
b) la pièce de tôle (11) englobe une cavité (13) avec le contour extérieur du profilé filé (7),
c) la pièce de tôle (11) constitue une partie de l'enveloppe extérieure de la carrosserie du véhicule automobile, et
d) la pièce de tôle (11) recouvre vers l'extérieur au moins une partie de l'élément d'assemblage.
